Europäisches Patentamt

European Patent Office

Office européen des brevets

(19)

(11) Veröffentlichungsnummer: **0 263 994 B1**

(12) # EUROPÄISCHE PATENTSCHRIFT

(45) Veröffentlichungstag der Patentschrift: 06.03.91

(51) Int. Cl.⁵: **H01S 3/036, H01J 7/14**

(21) Anmeldenummer: 87113631.3

(22) Anmeldetag: 17.09.87

(54) **Einrichtung zur Herstellung eines Gasgemisches.**

(30) Priorität: 30.09.86 DE 3633201
13.10.86 DE 3634867

(43) Veröffentlichungstag der Anmeldung:
20.04.88 Patentblatt 88/16

(45) Bekanntmachung des Hinweises auf die
Patenterteilung:
06.03.91 Patentblatt 91/10

(84) Benannte Vertragsstaaten:
**BE DE FR GB**

(56) Entgegenhaltungen:
FR-A- 1 427 855
GB-A- 1 278 639
GB-A- 1 449 056

PATENT ABSTRACTS OF JAPAN, Band 8, Nr.
247 (E-278)[1684], November 1984 & JP-
A-59-123 286

IBM TECHNICAL DISCLOSURE BULLETIN,
Band 25, Nr. 3B, August 1982, Seiten
1492-1493, New York, US; V.C. CHIAIESE Jr.
et al.: "MLC laser-sizing system - cooling
system"

PATENT ABSTRACTS OF JAPAN, Band 10,

Nr. 65 (E-388)[2122], März 1986 & JP-A-60-214
577

(73) Patentinhaber: **Siemens Aktiengesellschaft**
**Wittelsbacherplatz 2**
**W-8000 München 2(DE)**

(72) Erfinder: **Schramm, Herbert, Dipl.-Ing.(FH)**
**Rothenburger Strasse 9**
**W-8552 Höchstadt(DE)**

**Beschreibung**

Die Erfindung betrifft eine Einrichtung zur Herstellung eines Gasgemisches in einem geschlossenen Kreis, über die Entladungsstrecke eines Gaslasers geführten, umgewälzten Gasgemisches, mit beispielsweise 5000 hPa Gesamtdruck,

- mit sehr unterschiedlichen Partialdrücken seiner Gemischanteile, (beispielsweise 25 hPa gegenüber 5000 hPa),
- mit einer in immer kürzeren Intervallen erfolgenden Auffüllung mindestens eines Gemischanteils mit niedrigem Partialdruck und
- mit einem bei Erreichen einer Mindestdauer dieser Intervalle erfolgenden vollständigen Austausch des Gasgemisches.

Derartige Gasgemische werden üblicherweise in einem geschlossenen Kreis zum Betreiben von Gaslasern eingesetzt. Ein hierbei typisches Gasgemisch besteht beispielsweise zum Einsatz in einem ArF-Laser aus 7,5 hPa $F_2$, 350 hPa Ar und 1700 hPa He oder aus 5 bis 25 hPa $F_2$, mit 25 hPa Kr und 5000 hPa Ne. Hierin dient $F_2$ zusammen mit Ar bzw. Kr zur Bildung des Lasermoleküls, wobei He bzw. Ne im wesentlichen zur Stabilisierung der Entladung vorgesehen ist.

Die Lebensdauer derartiger Gasgemische in Excimerlaser-Gasen ist im wesentlichen durch zwei Prozesse begrenzt. Einerseits erfolgen zwischen Halogen und Behälterwandungen auch in gut passivierten Systemen chemische Dunkelreaktionen, die einen teilweisen Verbrauch des Halogens zur Folge haben und zur Erhöhung des Verunreinigungspegels führen. Andererseits verursacht ein unvermeidbarer Elektrodenabbrand ebenfalls chemische Reaktionen. Die durch den Elektrodenabbrand erzeugten Verunreinigungen können sowohl die Form von Partikeln als auch von flüchtigen Metall-Fluorid-Verbindungen haben.

Diese Verunreinigungen führen in einem Gaslaser dazu, daß zur Konstanthaltung der Ausgangsleistung die an der Entladungsstrecke des Gaslasers anliegende Hochspannung, beispielsweise von 20 kV auf 26 kV angehoben werden muß. Die Anhebung ist jedoch nur begrenzt möglich, zulässig und erwünscht. Jeweils beim Erreichen der zulässigen Spannung wird daher dem Gasgemisch Halogenid und/oder aktives Edelgas zugemischt und dadurch der Einfluß der Verunreinigungen im wesentlichen kaschiert. Die zuzuführenden Gasmengen sind jedoch bezogen auf den Inhalt des geschlossenen Kreises sehr klein, so daß der Druck in dem geschlossenen Kreis um einen Wert steigt, der kleiner ist als die Meßgenauigkeit üblicher Absolutdruckaufnehmer. Die zuzuführenden Gasmengen werden daher häufig zunächst in besonderen, von dem geschlossenen Kreis getrennten Kleingefäßen konditioniert, die anschließend jeweils vollständig in den geschlossenen Kreis entleert werden.

Durch die Kaschierung der Verunreinigungen im Gasgemisch sinkt die zur Erzielung der konstanten Ausgangsleistung erforderliche anliegende Hochspannung zunächst schnell ab, um danach durch das weitere Anwachsen der Absolutmenge der Verunreinigungen wieder langsam anzusteigen. Dieser Wiederanstieg wird mit wachsenden Mengen von Verunreinigungen immer schneller, so daß schließlich zum sinnvollen Weiterbetrieb des Gaslasers ein vollständiger Gasaustausch in dem geschlossenen Kreis erforderlich ist. Auch hierbei werden, wie oben angegeben, die einzelnen Gemischanteile in jeweils besonderen Behältern abgemessen, die dann vollständig in den geschlossenen Kreis entleert werden und dort den erforderlichen Gesamtdruck erzeugen. Dieses Verfahren zum Abmessen der einzelnen Gemischanteile ist jedoch verhältnismäßig ungenau und häufig nicht ausreichend variabel, und erzwingt zumindest beim Ergänzen des Gasgemisches mit Halogenid und/oder aktivem Edelgas ein im Hinblick auf den sich ändernden Gesamtdruck in gewisser Weise blindes Zuführen von Gemischanteilen in den geschlossenen Kreis des Gasgemisches.

Der Erfindung liegt daher die Aufgabe zugrunde, zur Herstellung von Gasgemischen mit sehr unterschiedlichen Partialdrükk en der einzelnen Gemischanteile eine Einrichtung zu schaffen, die ein genaues Messen von jeweils geringen Partialdruckänderungen während des Einspeisens von Gemischanteilen ermöglicht, auch wenn deren Partialdruck deutlich unter 1 % des Gesamtdruckes des Gasgemisches liegt.

Diese Aufgabe wird erfindungsgemäß bei einer Einrichtung der eingangs genannten Art dadurch gelöst,

- daß in mindestens einem Parallelzweig zu einem nahezu strömungsverlustfreien Abschnitt einer das Gasgemisch führenden Leitung ein Differenzdruckaufnehmer mit einem Gesamtmeßbereich entsprechend der niedrigen Partialdrücke in Reihe mit einem Magnetventil angeordnet ist,
- daß die Auffüllung der Gemischanteile mit niedrigem Partialdruck bei ausschließlich hierbei geschlossenem Magnetventil über den Differenzdruckaufnehmer geregelt ist und
- daß mindestens die Auffüllung des Gemischanteils mit dem höchsten Partialdruck über einen Absolutdruckaufnehmer geregelt ist.

Vorteilhafte Ausgestaltungen der erfindungsgemäßen Einrichtung bestehen darin, daß das mit dem Differenzdruckaufnehmer im Parallelzweig angeordnete Magnetventil bei stromloser Magnetspule geöffnet ist und daß die Gemischanteile des Gasgemisches von einem aktiven Lasergas, beispielsweise 25 hPa Krypton, einem Halogenid, beispielsweise 5 bis 25 hPa Fluor und einem Trägeredelgas, beispielsweise 5000 hPa Neon dargestellt sind und daß dabei für jeden Gemischanteil ein eigenes elektromagnetisch betätigbares Auffüllventil vorgesehen ist, das bei stromloser Magnetspule geschlossen ist.

Die erfindungsgemäß gestaltete Einrichtung ist sehr vortéilhaft, weil sie mit einem hohen Maß an Genauigkeit und Flexibilität kostengünstig eine gezielte Auffüllung auch kleinster Gemischanteile in einem insgesamt unter verhältnismäßig hohem Druck stehenden Gasgemisch gewährleistet. Dabei ermöglicht die erfindungsgemäße Einrichtung einen Betrieb sowohl von Hand als auch automatisiert mit einfachen elektrischen Steuerungen, so daß sowohl ein hoher Bedienkomfort als auch ein hoher Automatisierungsgrad erreichbar sind.

Ein Ausführungsbeispiel der Erfindung wird anhand einer Zeichnung näher erläutert. Es zeigen:

FIG 1 ein Schaltbild einer erfindungsgemäß ausgestatteten Einrichtung mit einem geschlossenen Kreis für ein Gasgemisch und

FIG 2 den zeitlichen Verlauf einer elektrischen Spannung an einem Gaslaser bei gezielten Ergänzungen einzelner Komponenten des durch diesen strömenden Gasgemisches.

Eine Umwälzpumpe 9 treibt ein Gasgemisch durch eine Ringleitung 12, wobei von dem Gasmisch nacheinander ein Gaslaser 10 und Gaskühler 11 passiert werden. In dem Gaslaser 10 ist durch das Gasgemisch die Entladungsstrecke gleichzeitig gespült und ständig mit frischem Gasgemisch gefüllt. Beim Betrieb des Gaslasers 10 wird das Gasgemisch aufgeheizt und unmittelbar nach dem Verlassen des Gaslasers 10 in dem Gaskühler 11 abgekühlt.

Zum Einspeisen der einzelnen Gemischanteile in die Ringleitung 12 sind im stromlosen Zustand geschlossene Auffüllventile 4, 5 und 6 vorgesehen. Beim dargestellten Ausführungsbeispiel dient das Auffüllventil 4 zur Einspeisung von Krypton als aktivem Lasergas mit einem Partialdruck von 25 hPa, das Auffüllventil 5 zur Einspeisung von $F_2$ als Halogen mit einem Partialdruck von 5 bis 25 hPa und das Auffüllventil 6 zur Einspeisung von Neon als Trägeredelgas mit 5000 hPa. Dabei werden die Auffüllventile 4 und 5 in nicht dargestellter Art und Weise vom Ausgang eines Differenzdruckaufnehmers 1 und das Auffüllventil 6 vom Ausgang eines Absolutdruckaufnehmers 3 gesteuert. Der Meßbereich des Differenzdruckaufnehmers 1 entspricht den niedrigen Partialdrücken und der Meßbereich des Absolutdruckaufnehmers 3 erstreckt sich mindestens über den betriebsmäßig zulässigen Gesamtdruck. Der Absolutdruckaufnehmer 3 ist über eine Stichleitung 13 an die Ringleitung 12 angeschlossen. Dagegen liegt der Differenzdruckaufnehmer 1 in Reihe mit einem Magnetventil 2 in einem

Parallelzweig 14, der einem nahezu strömungsverlustfreien Abschnitt der Ringleitung 12 parallel liegt. Das Magnetventil 2 ist im stromlosen Zustand geöffnet.

Vor der Inbetriebnahme des Gaslasers 10 wird die Ringleitung 12 mitsamt den ihr angeschlossenen Geräten durch eine Vakuumpumpe 8 über ein im strombelasteten Zustand geöffnetes Evakuierungsventil 7 evakuiert. Nach dem Erreichen eines ausreichend niedrigen Druckes in der Ringleitung 12 wird das Evakuierungsventil 7 stromlos geschaltet und schließt. Anschliessend wird das Magnetventil 2 an Spannung gelegt und dadurch geschlossen und kurz darauf das Auffüllventil 4 ebenfalls an Spannung gelegt und dadurch geöffnet. Durch das Auffüllventil 4 strömt nun das als aktives Lasergas vorgesehene Krypton in die Ringleitung 12 bis der infolge des geschlossenen Magnetventils 2 einseitig noch an einem evakuierten Abschnitt des Parallelzweiges 14 liegende Differenzdruckaufnehmer 1 einen Druckanstieg bis auf 25 hPa meldet, dadurch das Auffüllventil 4 spannungsfrei schaltet und schließt. Durch diese Maßnahmen sind also die Ringleitung 12, die Umwälzpumpe 9, der Gaslaser 10, der Gaskühler 11 und durch darauffolgendes Öffnen des Magnetventils 2 auch der gesamte Parallelzweig 14 mit aktivem Lasergas gefüllt. Der Differenzdruckaufnehmer 1 zeigt dann wieder einen Differenzdruck "Null" an.

Nunmehr wird das Magnetventil 2 erneut geschlossen und das Auffüllventil 5 an Spannung gelegt und dadurch geöffnet, so daß Fluor in die Ringleitung 12 einströmt, bis ein vorgewählter Differenzdruck im Bereich von 5 bis 25 hPa vom Differenzdruckaufnehmer 1 gemeldet wird. Nacheinander werden dann das Auffüllventil 5 geschlossen und das Magnetventil 2 geöffnet. Die Ringleitung 12 und die ihr angeschlossenen Geräte sind nun mit einem Gemisch aus 25 hPa Krypton und 5 bis 25 hPa Fluor gefüllt, so daß in diesem Stadium ein Gesamtdruck von 30 bis 50 hPa in der Ringleitung 12 herrscht. Der Differenzdruckaufnehmer zeigt jedoch wiederum einen Differenzdruck "Null" an.

Bei geöffnet bleibendem Magnetventil 2 wird nun das Auffüllventil 6 geöffnet und es strömt Neon in die Ringleitung 12 bis ein Gesamtdruck von etwa 5000 hPa erreicht ist und das Auffüllventil 6 durch ein vom Absolutdruckaufnehmer 3 abgegebenes Signal geschlossen wird.

Sobald dann die Umwälzpumpe 9 das Gasgemisch durch die Ringleitung 12 treibt, ist der Gaslaser 10 betriebsbereit. Beim Betrieb des Gaslasers 10 werden jedoch unvermeidbar auch Verunreinigungen erzeugt und in das Gasgemisch eingetragen. Um die Ausgangsleistung des Gaslasers 10 trotzdem konstant zu halten, muß die an dessen Entladungsstrecke anliegende Spannung erhöht werden. Dieser Erhöhung sind jedoch Grenzen gesetzt. Beim Erreichen einer maximal zugelassenen Spannung wird daher das Magnetventil 2 geschlossen und das Auffüllventil 4 und/oder 5 kurzzeitig geöffnet, so daß während des Betriebs des Gaslasers 10 eine geringe, von dem Differenzdruckaufnehmer 1 genau erfaßte Menge Krypton und/oder Fluor, in die Ringleitung 12 einströmt. Das Auffüllventil 4 und/oder 5 bleibt geöffnet bis die an der Entladungsstrecke anliegende Spannung bei konstant gehaltener Laserausgangsleistung wieder auf ihren Ausgangswert gefallen ist. Danach wird auch das Magnetventil 2 wieder geöffnet.

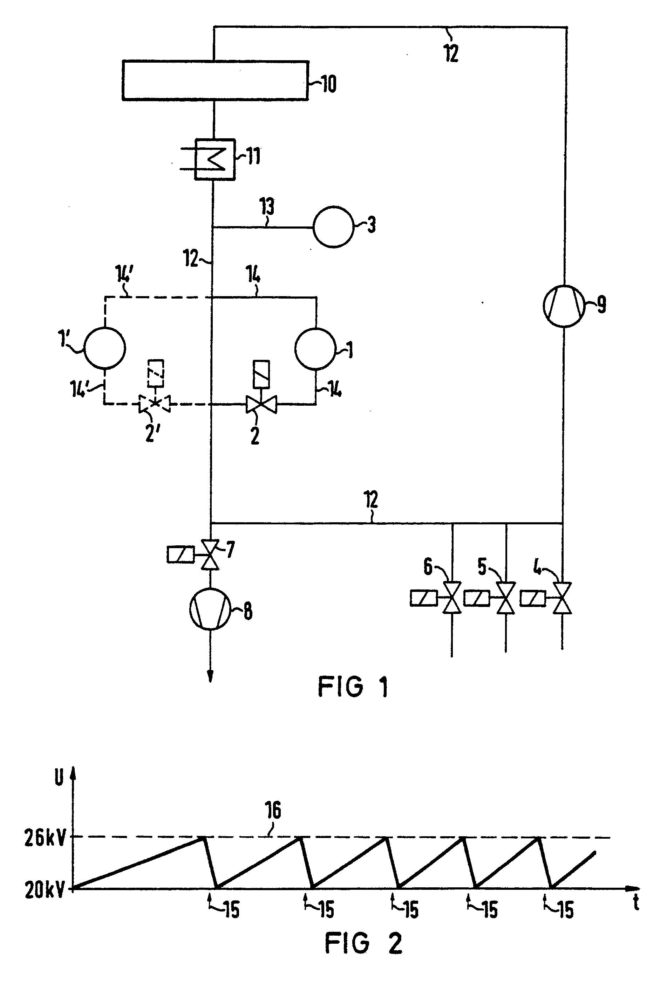

In FIG 2 ist der zeitliche Verlauf der an der Entladungsstrecke zur Erzielung konstanter Ausgangsleistung erforderlichen Spannung dargestellt. Dabei ist auf der Abszisse die Zeit und auf der Ordinate die Spannung aufgetragen. Die Abszisse kreuzt die Ordinate bei der dem Ausgangswert der Spannung, beispielsweise 20 kV, entsprechenden Wert. Der maximal zugelassene Wert, beispielsweise 26 kV, für die Spannung ist durch eine gestrichelte Linie 16 angegeben. Der Anstieg der Spannung erfolgt bei einem frischen Gasgemisch relativ langsam, so daß der maximal zugelassene Spannungswert, beispielsweise erst nach mehr als einer Stunde Betriebsdauer erreicht ist. Während der in FIG 2 mit einem Pfeil 15 angedeuteten Zeit wird das Gasgemisch in der Ringleitung 12 und damit auch im Gaslaser 10 mit etwas Fluor und/oder Krypton aufgefüllt und die Spannung sinkt wieder auf den Ausgangswert.

Da jedoch die Verunreinigungen dabei in dem Gasgemisch verbleiben und sich kumulieren, werden die zeitlichen Intervalle, nach denen die maximal zugelassene Spannung wieder erreicht ist, immer kürzer. Außerdem wird durch das Auffüllen einzelner Gaskomponenten auch die Zusammensetzung des Gasgemisches verändert. Die während der einzelnen Auffüllvorgänge zugeführten Gasmengen sind jeweils bei geschlossenem Magnetventil 2 über den Differenzdruckaufnehmer 1 genau erfaßt. Beim Erreichen von vorgegebenen Werten für das zwischen zwei Auffüllvorgängen liegende zeitliche Intervall und/oder für die Veränderung der Gemischzusammensetzung wird der Gaslaser 10 stillgesetzt und die Ringleitung 12 im Anschluß an eine erneute Evakuierung mit frischem Gasgemisch gefüllt.

Bei sehr unterschiedlichen Partialdrücken für das aktive Edelgas und das Halogen oder zur extrem genauen Erfassung der einzelnen Auffüllmengen ist in besonderen Fällen in einem gestrichelt dargestellten Parallelzweig 14' ein Differenzdruckaufnehmer 1' in Reihe mit einem Magnetventil 2' vorgesehen.

Der gesamte Meßbereich des Differenzdruckaufnehmers 1' entspricht beispielsweise dem kleinsten Partialdruck oder der Druckänderung bei einer einzigen Auffüllung zu einer Zeit 15.

Zur Vereinfachung der elektrischen Verschaltung der einzelnen Geräte ist es in besonderen Fällen zweckmäßig für jedes der an dem Gasgemisch beteiligten Einzelgase einen besonders auf dessen Partialdruck zugeschnittenen Parallelzweig 14 mit Differenzdruckaufnehmer 1 und Magnetventil 2 vorzusehen.

## Ansprüche

1. Einrichtung zur Herstellung eines in einem geschlossenen Kreis, über die Entladungsstrecke eines Gaslasers (10), umgewälzten Gasgemisches (mit beispielsweise 5000 hPa Gesamtdruck)
   - mit sehr unterschiedlichen Partialdrükken, beispielsweise 25 hPa gegenüber 5000 hPa, seiner Gemischanteile,
   - mit einer in immer kürzeren Intervallen erfolgenden Auffüllung mindestens eines Gemischanteils mit niedrigem Partialdruck und
   - mit einem bei Erreichen einer Mindestdauer dieser Intervalle erfolgenden vollständigen Austausch des Gasgemisches, **dadurch gekennzeichnet**,
   - daß in mindestens einem Parallelzweig (14, 14') zu einem nahezu strömungsverlustfreien Abschnitt einer das Gasgemisch führenden Ringleitung (12) ein Differenzdruckaufnehmer (1, 1') mit einem Gesamtmeßbereich entsprechend der niedrigen Partialdrücke in Reihe mit einem Magnetventil (2, 2') angeordnet ist,
   - daß die Auffüllung der Gemischanteile mit niedrigem Partialdruck bei ausschließlich hierbei geschlossenem Magnetventil (2, 2') über den Differenzdruckaufnehmer (1, 1') geregelt ist und
   - daß mindestens die Auffüllung des Gemischanteils mit dem höchsten Partialdruck über einen Absolutdruckaufnehmer (3) geregelt ist.

2. Einrichtung nach Anspruch 1, **dadurch gekennzeichnet**, daß das Magnetventil (2, 2') bei stromloser Magnetspule geöffnet ist.

3. Einrichtung nach Anspruch 1 oder 2, **dadurch gekennzeichnet**, daß die Gemischanteile des Gasgemisches von einem aktiven Lasergas, beispielsweise Krypton mit 25 hPa, einem Halogenid, beispielsweise $F_2$ mit 5 bis 25 hPa, und einem Trägeredelgas, beispielsweise Neon mit 5000 hPa, dargestellt sind.

4. Einrichtung nach einem der Ansprüche 1 bis 3, **dadurch gekennzeichnet**, daß für jeden Gemischanteil ein eigenes, elektromagnetisch betätigbares Auffüllventil (4, 5, 6) vorgesehen ist, das bei stromloser Magnetspule geschlossen ist.

5. Einrichtung nach einem der Ansprüche 1 bis 4, **dadurch gekennzeichnet**, daß die in Intervallen erfolgende Auffüllung der Gemischanteile bei konstanter Ausgangsleistung eines Gaslasers (10) in Abhängigkeit von der Spannung an dessen Entladungsstrecke erfolgt, die von dem Gasgemisch durchströmt wird.

6. Einrichtung nach einem der Ansprüche 1 bis 5, **dadurch gekennzeichnet**, daß für jeden Gemischanteil, dessen Partialdruck kleiner als der halbe Gesamtdruck ist, in einem besonderen eigenen Parallelzweig (14, 14′) ein Differenzdruckaufnehmer (1, 1′) in Reihe mit einem Magnetventil (2, 2′) vorgesehen ist.

## Claims

1. Device for the production of a gas mixture (at, for example, 5000 hPa total pressure) circulating in a closed circuit across the discharge gap of a gas laser (10)
   - having greatly differing partial pressures, such as 25 hPa as opposed to 5000 hPa, of its mixture components,
   - replenishment of at least one component of the mixture with low partial pressure being carried out at increasingly shorter intervals and
   - a complete exchange of the gas mixture taking place when a minimum length of these intervals is reached , characterised in that
   in at least one branch (14, 14') parallel to a substantially flow loss-free section of a circular pipeline (12) which carries the gas mixture, a differential pressure sensor (1, 1') having a total measuring range corresponding to the low partial pressures is arranged in series with a magnetic valve (2, 2'),
   - in that the replenishment of the mixture components having the low partial pressure exclusively when the magnetic valve (2, 2') is closed is controlled by means of the differential pressure sensor (1,1') and
   - in that at least the replenishment of the mixture component having the highest partial pressure is controlled by means of an absolute pressure sensor (3).

2. Device according to claim 1, characterised in that the magnetic valve (2, 2') is opened when the magnetic coil is not supplied with current.

3. Device according to claim 1 or 2, characterised in that the mixture components of the gas mixture are represented by an active laser gas, for example krypton at 25 hPa, a halide, for example $F_2$ at 5 to 25 hPa, and a noble carrier gas, for example neon at 5000 hPa.

4. Device according to one of claims 1 to 3, characterised in that for each mixture component there is provided an individual electromagnetically operable feed valve (4, 5, 6) which is closed when the magnetic coil is not supplied with current.

5. Device according to one of claims 1 to 4, characterised in that the replenishment of the mixture components taking place at intervals is carried out during constant output power of a gas laser (10) in dependence on the voltage at its discharge gap through which the gas mixture circulates.

6. Device according to one of claims 1 to 5, characterised in that for each mixture component having a partial pressure smaller than one half of the total pressure a differential pressure sensor (1,1') is connected in series with a magnetic valve (2, 2') in a special individual parallel branch (14, 14').

## Revendications

1. Dispositif de production d'un mélange gazeux (ayant par exemple une pression totale de 5000 hPa), circulant dans un circuit fermé, notamment dans la zone de décharge d'un laser à gaz (10),
   - dont les constituants ont des pressions partielles très différentes, par exemple de 25 hPa en regard de 5000 hPa,
   - un remplissage d'au moins un des constituants à faible pression partielle s'effectuant à des intervalles de plus en plus courts, et
   - un remplacement total du mélange gazeux s'effectuant lorsqu'est atteinte la durée minimum de ces intervalles, caractérisé
   - en ce que, dans au moins une branche (14, 14') en parallèle à un tronçon, presque exempt de perte de courant, d'un conduit circulaire (12), dans lequel passe le mélange gazeux, est monté en série, avec une électrovanne (2, 2'), un détecteur de pression différentielle (1, 1') ayant une plage totale de mesure correspondant aux pressions partielles basses,
- en ce que le remplissage des constituants du mélange ayant une faible pression partielle est réglé par le détecteur de pression différentielle (1, 1'), exclusivement lorsque l'électrovanne (2, 2') est fermée, et
- en ce qu'au moins le remplissage du constituant du mélange ayant la pression parielle la plus élevée est réglé par un détecteur de pression absolue (3).

2. Dispositif suivant la revendication 1, caractérisé en ce que l'électrovanne (2, 2') est ouverte lorsque du courant électrique ne passe pas dans la bobine de l'électroaimant .

3. Dispositif suivant la revendication 1 ou 2, caractérisé en ce que les constituants du mélange gazeux sont constitués d'un gaz actif de laser, par exemple de krypton sous 25 hPa, d'un halogénure, par exemple de $F_2$, sous 5 à 25 hPa, et d'un gaz rare porteur, par exemple de néon, sous 5000 hPa.

4. Dispositif suivant l'une des revendications 1 à 3, caractérisé en ce que pour chaque constituant du mélange gazeux, il est prévu sa propre vanne de remplissage (4, 5, 6), qui peut être manoeuvrée par voie électromagnétique et qui est fermée lorsque du courant électrique ne passe pas dans la bobine de l'électroaimant.

5. Dispositif suivant l'une des revendications 1 à 4, caractérisé en ce que le remplissage des constituants du mélange, qui s'effectue par intervalles, s'effectue à une puissance de sortie constant d'un laser à gaz (10), en fonction de la tension aux bornes de sa zone de décharge dans laquelle passe le mélange gazeux.

6. Dispositif suivant l'une des revendications 1 à 5, caractérisé en ce que, pour chaque constituant du mélange gazeux dont la pression partielle est inférieure à la moitié de la pression totale, il est prévu dans une branche propre particulière en parallèle (14, 14'), un détecteur de pression différentielle (1, 1') en série avec une électrovanne (2, 2').

FIG 1

FIG 2